# EUROPEAN PATENT APPLICATION

(11) **EP 1 783 883 A1**
(43) Date of publication of application: **09.05.2007**
(21) Application number: 05774916.0
(22) Date of filing: 22.08.2005
(51) Int. Cl.: H02K 15/03, B21D 28/16, B21D 53/26

(54) **DEVICE FOR SHAVING PROJECTION FORMED ON FLYWHEEL AND METHOD OF SHAVING PROJECTION**

(30) Priority: 25.08.2004 JP 2004245282
(71) Applicant: Mitsuba Corporation, Kiryu-shi, Gunma 376-8555 (JP)
(72) Inventor: HORIUCHI, Nobuya, MITSUBA CORPORATION, Kiryu-shi, Gunma 3768555 (JP); YOKOO, Tsugio, MITSUBA CORPORATION, Kiryu-shi, Gunma 3768555 (JP); IDEI, Tsutomu, MITSUBA CORPORATION, Kiryu-shi, Gunma 3768555 (JP); FUKUZAWA, Kouji, MITSUBA CORPORATION, Kiryu-shi, Gunma 3768555 (JP); ITO, Yasuhito, MITSUBA CORPORATION, Kiryu-shi, Gunma 3768555 (JP)
(74) Representative: Kedinger, Jean-Paul
(86) International application number: PCT/JP2005/015584
(87) International publication number: WO 2006/022392

(57) **Abstract**

To shave triggering projections formed in a projecting manner outward from the outer periphery of a yoke in a flywheel to ensure the roundness sufficiently as well as to improve the sensing function as a trigger. A boss plate 5 is preliminarily caulked and fixed to a yoke 2 that constitutes a flywheel 1, while a shaving apparatus 7 is arranged in such a manner that on a fixed pedestal 8 is provided a supporting shaft member 10 on which the boss cylindrical portion of the boss plate 5 is to be fitted, and that on a movable pedestal 14 is provided a shaving die 15 concentrically with the supporting shaft member 10 and adapted to shave projections 2e in the axial direction of the supporting shaft member 10.

## Description

### [Technical Field]

The present invention relates to a technical field of an apparatus and method for shaving a projection formed on a flywheel to be fitted on a rotation axis to detect the rotational state thereof.

### [Background Art]

Among flywheels of this kind, there has generally been known a type in which a permanent magnet is provided on the inner periphery of the cylindrical portion of a yoke that is formed in a bottomed cylindrical shape and a plurality of projections for receiving trigger signals (hereinafter referred to as "triggering projections") are formed circumferentially in a projecting manner outward from the outer peripheral surface of the cylindrical portion, such a flywheel being adapted to be fitted integrally over the rotation axis of an actuator, while a sensor being provided facing the cylindrical portion of the yoke to detect a magnetized projection (trigger) using the sensor and thereby the rotational state of the rotation axis (the driving state of the actuator) is detected. As a method for forming a triggering projection on the cylindrical portion of a yoke that constitutes such a flywheel, there have been proposed various methods such as: separately providing a projection to be fixed to the cylindrical portion of the yoke using integrating means such as adhesive; and punching the cylindrical portion to form a projection. Meanwhile, projections are to be formed on the outer peripheral surface of a yoke to be fitted on a rotation axis, and are required to be positioned at a constant radius from the central axis of the yoke, that is, to be formed without damaging the roundness of the yoke. In particular, when punching the cylindrical portion of the yoke to form projections, it is often the case that the cylindrical portion is deformed, and therefore means for preventing the roundness from being damaged is required.

In order to improve measures, there has been proposed a simple and inexpensive method for forming a projection, the method comprising: a first punching step of forming an acute-angled projection on the cylindrical portion of a yoke; and a second punching step of forming the acute-angled projection into a circular shape (For example, Japanese Published Unexamined Patent Application No. S57-148568).

However, in accordance with the above-described conventional method, because the punching operation using a punch is adapted to be performed inside the cylinder of the yoke, it is impossible to ensure a large punching force, and it is therefore arranged that a triggering projection (pole) is formed through the first punching step in which an acute-angled projection is preliminarily formed to project significantly outward and the second punching step in which the projection is retreated inward to be a circular shape, which thus requires two punching steps, resulting in a problem in that the number of working processes is increased.

Meanwhile, in order to allow a magnetized projection to function as a means for generating trigger signals, the position where the projection is formed as well as the end surface (corner angle) of the projection which is positioned on the rotating direction of the flywheel is required to be finished sharply and accurately. Therefore, there is a problem in that even if such two punching steps may be taken to form a projection, it is difficult to ensure a sufficient accuracy in the position and the end surface of the projection. In addition, the process of forming a projection through such two punching steps is to be applied to a yoke alone before required members are incorporated thereinto. Therefore, there is a problem in that even if the roundness of a projection may be ensured in a yoke alone, when the yoke is integrated with a boss plate for fitting on a rotation axis using, for example, caulking and fixing means, the caulking and fixing force is also applied to the yoke, which damages the roundness of the yoke, resulting in a reduction in positional accuracy of the projection. The problems raised here are to be solved by the present invention.

### [Disclosure of the Invention]

The present invention has been made in consideration of the above-described circumstances and to solve the problems. The first aspect of the invention provides a shaving apparatus adapted to shave a projection formed in a projecting manner outward from the outer periphery of a bottomed cylindrical yoke in a flywheel to be fitted and fixed on a rotation axis, the shaving apparatus comprising: a fixed pedestal provided with a supporting shaft member which penetratingly supports the boss portion of the yoke for fitting on the rotation axis; and a movable pedestal which is displaced cocentrically with the supporting shaft member and is provided with the shaving die for shaving the projection in the axial direction of the supporting shaft member.

Then, with the arrangement above, the roundness can be ensured sufficiently, and it is possible to form a highly reliable flywheel in which the circumferential end surface of a projection is positioned accurately.

The second aspect of the invention provides the shaving apparatus according to the first aspect of the invention, wherein the yoke has a plurality of projections formed circumferentially on the outer periphery thereof, and the shaving die has a plurality of shaving teeth formed circumferentially on the inner cylindrical surface thereof along the outer diameter of the cylindrical portion of the yoke in such a manner as to face the respective projections, whereby a plurality of projections can be shaven in a single shaving operation.

The third aspect of the invention provides the shaving apparatus according to the second aspect of the invention, wherein the shaving teeth are adapted to shave the outer peripheral surface and both the circumferential sides of the projections, whereby the roundness of the projections can be ensured sufficiently, and the accuracy in forming the projections circumferentially can be increased, resulting in an increase in accuracy of the detecting operation using the projections.

The fourth aspect of the invention provides the shaving apparatus according to any of the first to third aspects of the invention, wherein between the yoke and the fixed pedestal is provided positioning means for positioning the yoke circumferentially with respect to the fixed pedestal, whereby the circumferential positioning of the yoke can be made easily when fixed to the fixed pedestal.

The fifth aspect of the invention provides the shaving apparatus according to any of the first to fourth aspects of the invention, wherein on the fixed pedestal is provided a shaving receiving member to be butted against the end surface of the projections leading the shaving, and in the shaving receiving member is formed a guide portion adapted to guide chips due to shaving out of the shaving apparatus, whereby chips due to shaving can be moved out of the way.

The sixth aspect of the invention provides a shaving method, wherein when shaving a projection formed in a projecting manner outward from the outer periphery of a bottomed cylindrical yoke in a flywheel to be fitted and fixed on a rotation axis, a shaving apparatus comprises: a fixed pedestal provided with a supporting shaft member which penetratingly supports the boss portion of the yoke for fitting on the rotation axis; and a movable pedestal which is displaced cocentrically with the supporting shaft member and is provided with the shaving die for shaving the projection in the axial direction of the supporting shaft member, said method comprising steps of; fitting the boss portion of the yoke over the supporting shaft member; and then shaving the projection on the yoke in the axial direction of the supporting shaft member.

Then, with the arrangement above, the roundness can be ensured sufficiently, and it is possible to form a highly reliable flywheel in which the circumferential end surface of a projection is positioned accurately.

The seventh aspect of the invention provides the shaving method according to the sixth aspect of the invention, wherein the boss portion of the yoke is caulked and fixed preliminarily, whereby the yoke can be formed separately from the boss portion, and even in this case, the accuracy in forming the projections on the outer periphery of the yoke can be increased.

In accordance with the first aspect of the invention, the roundness can be ensured sufficiently, and it is possible to form a highly reliable flywheel in which the circumferential end surface of a projection is positioned accurately.

In accordance with the second aspect of the invention, a plurality of projections can be shaven in a single shaving operation.

In accordance with the third aspect of the invention, the roundness of the projections can be ensured sufficiently, and the accuracy in forming the projections circumferentially can be increased, resulting in an increase in accuracy of the detecting operation using the projections.

In accordance with the fourth aspect of the invention, the circumferential positioning of the yoke can be made easily when fixed to the fixed pedestal.

In accordance with the fifth aspect of the invention, chips due to shaving can be moved out of the way.

In accordance with the sixth aspect of the invention, the roundness can be ensured sufficiently, and it is possible to form a highly reliable flywheel in which the circumferential end surface of a projection is positioned accurately.

In accordance with the seventh aspect of the invention, the yoke can be formed separately from the boss portion, and even in this case, the accuracy in forming the projections on the outer periphery of the yoke can be increased.

### [Brief Description of the Drawings]

[Fig. 1] Fig. 1 is a cross-sectional view of a flywheel.
[Fig. 2] Fig. 2 is a cross-sectional view illustrating a shaving apparatus.
[Fig. 3] Fig. 3 is a bottom plan view illustrating a movable pedestal of the shaving apparatus.
[Fig. 4] Fig. 4 is a partially enlarged view of Fig. 3.
[Fig. 5] Fig. 5 is a partial side elevational view illustrating a shaving punch.
[Fig. 6] Fig. 6(A) and Fig. 6(B) are cross-sectional views of a substantial part illustrating the shaving operation of the shaving apparatus.

### [Best Mode for Carrying Out the Invention]

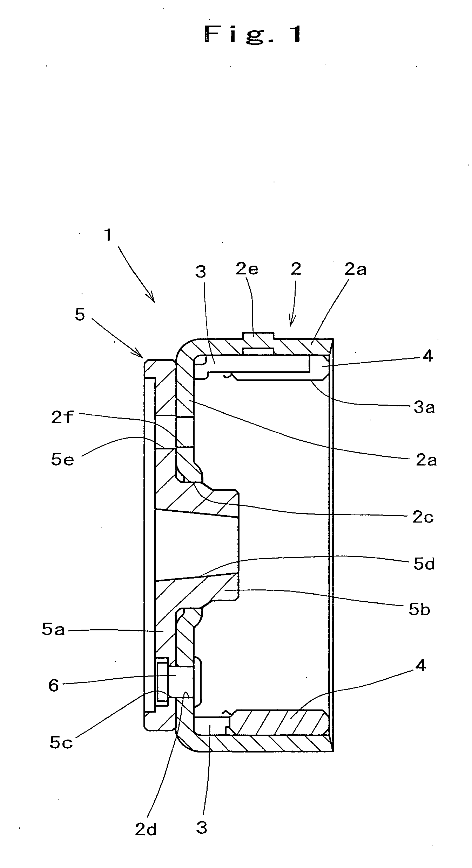

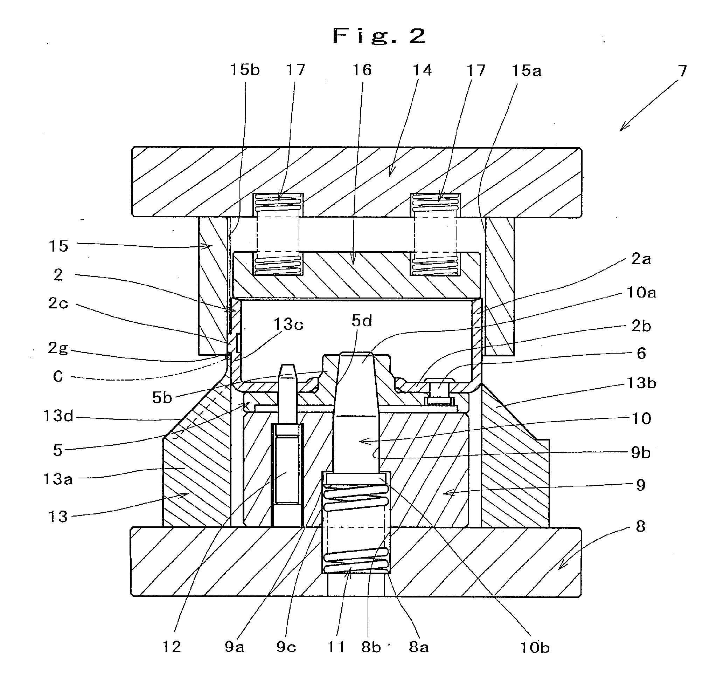

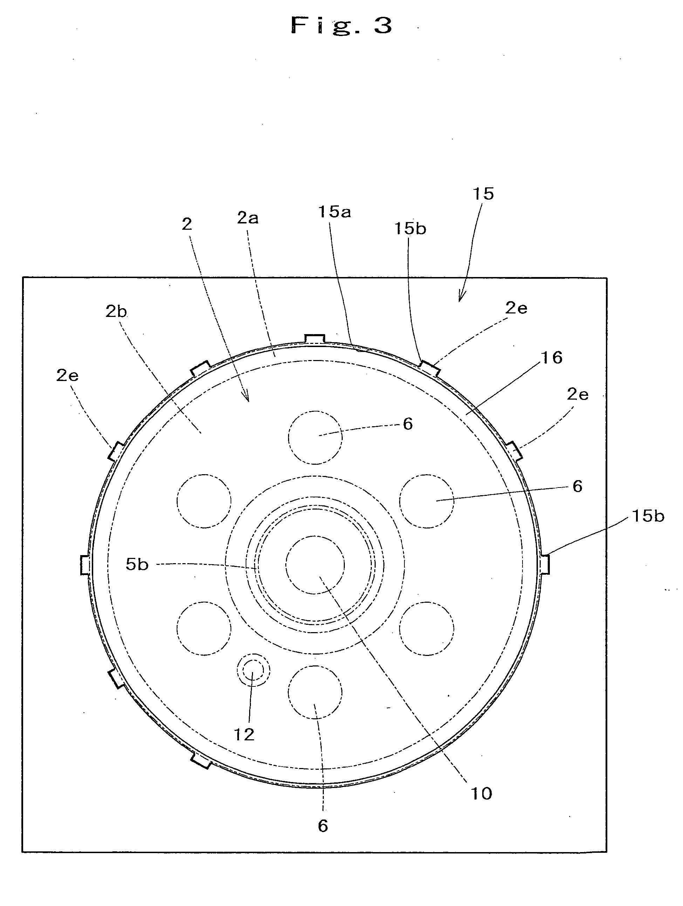

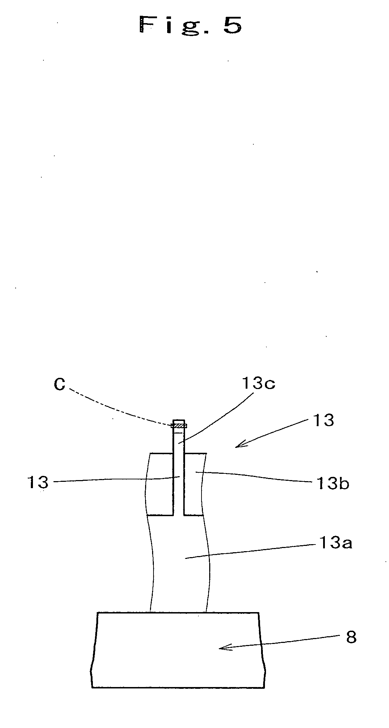

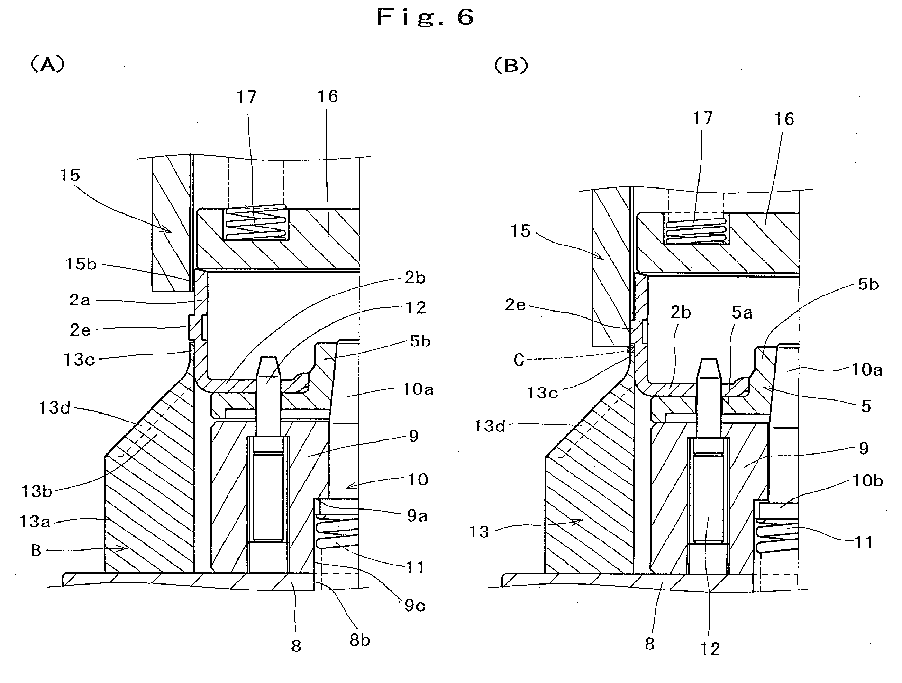

Next will be described an embodiment of the present invention with reference to Fig. 1 to Fig. 6.

In the figures, the numeral 1 indicates a flywheel adapted to be fitted on the crankshaft of the engine of a motorcycle, the flywheel 1 comprising a yoke 2 formed of ferromagnetic material (e.g. iron) in a bottomed cylindrical shape, and on the inner peripheral surface of the cylindrical portion 2a of the yoke 2 is provided a magnet holder 3 via integrating means such as adhesive, the magnet holder 3 and a holder pin 3a disposed on the opening side of the cylindrical portion 2a supporting multiple pairs of permanent magnets 4.

Further, in the cylindrical bottom portion 2b of the yoke 2 that constitutes the flywheel 1 is opened a through hole 2c concentrically with the cylindrical portion 2a, and on the outside surface of the cylindrical bottom portion 2b is provided a boss plate 5 integrally. The boss plate 5 comprises a disk-shaped plate portion 5a and a boss cylindrical portion 5b positioned around the central axis of the plate portion 5a to be fitted and joined to the through hole 2c of the yoke. In the plate portion 5a and the cylindrical bottom portion 2b of the yoke are opened a plurality of caulking through holes 5c and 2d, and the yoke 2 and the boss plate 5 are to be caulked and fixed integrally by inserting a caulking pin 6 into each of the caulking through holes 5c and 2d. Also, the boss cylindrical portion 5b projects from the through hole 2c to inside the cylindrical portion 2a of the yoke (toward the cylindrical bottom portion 2b) when fixed integrally to the yoke 2, the cylindrical hole 5d being formed in such an inclined manner that the hole diameter decreases the closer to the opening of the cylindrical portion 2a of the yoke. The thus arranged flywheel 1 is adapted to be connected interlockingly with a crankshaft so as not to be rotated by allowing the boss cylindrical portion 5b to be fitted over the crankshaft via the inclined cylindrical hole 5d.

On the outer peripheral surface of the cylindrical portion 2a of the yoke are then formed circumferentially a plurality of axially long triggering projections 2e in a projecting manner outward therefrom. The projections 2e are formed circumferentially at a predetermined angular interval (30 degrees in the present embodiment) within an angular range of 240 degrees not all around the cylindrical portion 2a by an appropriate number (9 pieces in the present embodiment). Then, the flywheel 1 is formed by incorporating required members such as permanent magnets 4 into the yoke 2 with the projections 2e formed preliminarily on the outer periphery thereof by punching the cylindrical portion 2a.

In this arrangement, the triggering projections 2e on the cylindrical portion 2a of the yoke are preliminarily formed radially and circumferentially in a larger size, the projections being adapted to be shaven by a shaving apparatus 7 to be described hereinafter so that the projections 2e are formed into a preset size, and that the roundness of the yoke 2 including the projections 2e is ensured, and further that the circumferential positioning of the projections 2e is made accurately.

Here, on a fixed pedestal 8 that constitutes the shaving apparatus 7 as a fixed side member is fixed integrally a circular fixed guide body 9 into which the yoke 2 with the boss plate 5 incorporated thereinto is to be incorporated, in the central axis portion of the fixed guide body 9 being provided a supporting shaft member 10 according to the present invention. The supporting shaft member 10 comprises a tapered leading end portion 10a having a smaller outer diameter as closer to the leading end (upper end) thereof, and is formed in a pin shaft shape comprising a head portion 10b, which has a diameter larger than that of the shaft member, in the base end (lower end) portion. Meanwhile, in the central axis portion of the fixed guide body 9 is opened a through hole with a stepped portion 9a formed in the vertical intermediate portion thereof, the upper through hole 9b positioned above being arranged in such a manner as to have a size capable of penetrating the supporting shaft member 10 vertically movably, and the lower through hole 9c being formed in such a manner as to have a diameter larger than that of the upper through hole 9b. Then, the leading end portion 10a of the supporting shaft member 10 is adapted to be inserted through the lower through hole 9c so that the head portion 10b is engaged with the stepped portion 9a not to run therethrough upward, where the leading end portion 10a is to project from the upper surface of the fixed guide body 9. Here, the leading end portion 10a of the supporting shaft member is formed in such a manner as to have the same shape as the crankshaft over which the flywheel 1 is to be fitted so that the boss cylindrical portion 5b of the boss plate 5 is fitted so as not to be rotated.

Further, in the fixed pedestal 8 is opened a through hole 8b with a stepped portion 8a formed therein, the through hole 8b being adapted to communicate with the lower through hole 9c of the fixed guide body 9. Then, in the through hole 8b is mounted a coil spring 11 in such a manner as to be engaged with the stepped portion 8a, the upper end portion of the coil spring 11 being adapted to be fitted into the lower through hole 9c of the fixed guide body to press and support the head portion 10b of the supporting shaft member 10 upward. Thus, the supporting shaft member 10 is arranged in such a manner as to receive the urging force of the coil spring 11 to allow the leading end portion 10a to project from the fixed guide body 9, and to move downward relative to the fixed guide body 9 by compressing the coil spring 11.

In addition, in a preset arbitrary position in the fixed guide body 9 is disposed a vertically oriented positioning pin 12, while the cylindrical bottom portion 2b of the yoke and the plate portion 5a of the boss plate 5 in the flywheel 1 are opened, respectively, positioning holes 2f, 5e in a communicating manner with each other, whereby the yoke 2 with the boss plate 5 incorporated thereinto is adapted to be incorporated into the fixed guide body 9 while being positioned circumferentially against the body by fitting the boss cylindrical portion 5b over the supporting shaft member 10 and the positioning holes 2f, 5e over the positioning pin 12, the arrangement corresponds to the positioning means of the present invention.

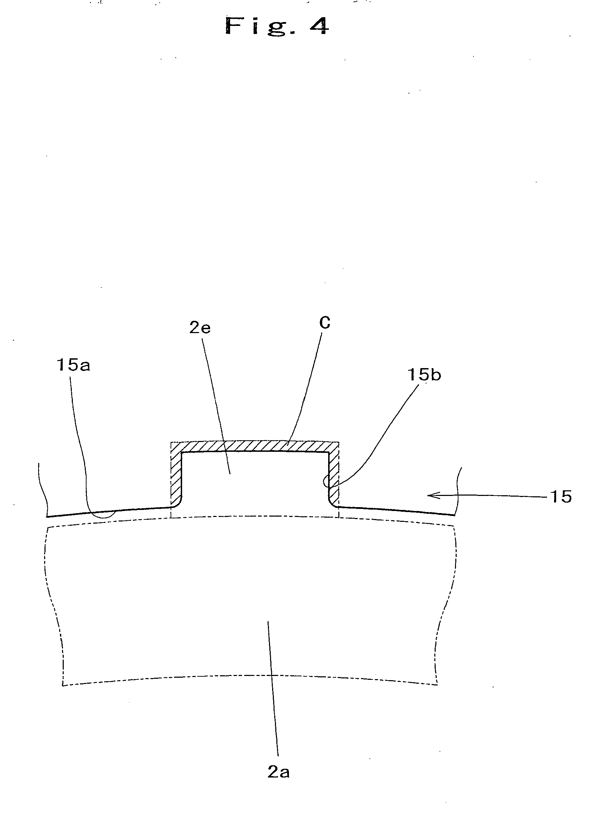

Here, the boss plate 5 is caulked and fixed to the yoke 2 to be incorporated into the fixed guide body 9 for shaving as mentioned above, where the projections 2e are formed on the outer periphery of the cylindrical portion 2a in a size larger than preset ones for triggering to function as a flywheel 1 also as mentioned above. It is then arranged that shaving the projections 2e using the shaving apparatus 7 allows the cut-off margin C to be cut off as shown in Fig. 4, and thus the projections 2e to be shaven (cut) into a preset size.

Further, on the fixed pedestal 8 is provided a shaving punch (corresponding to the shaving receiving member of the present invention) 13 around the fixed guide body 9 to be butted upward against the lower end surface (end surface leading the shaving) 2g of the projections 2e on the cylindrical portion 2a of the yoke that has been incorporated into the fixed guide body 9. The shaving receiving member 13 comprises: a ring-shaped supporting portion 13a to be fitted freely on the outer periphery of the fixed guide body 9; an inclined supporting portion 13b disposed so as to be mounted on the supporting portion 13a and provided with an inclined plane having a smaller outer diameter the closer to the upper end thereof; and an abutting piece portion 13c projecting upward from the upper end portion of the inclined supporting portion 13b to be butted against the lower end surface 2g of the projections 2e through the upper end portion thereof, nine abutting piece portions 13c being formed circumferentially on the inclined supporting portion 13b in such a manner as to face the respective projections 2e.

Then, each abutting piece portion 13c is formed in such a manner as to have the same circumferential length as that of the projections 2e, and under each abutting piece portion 13c is formed integrally an inclined guide portion 13d in a projecting manner from the upper surface of the inclined supporting portion 13b, the guide portion 13d being formed as a guide surface for guiding cut-off margin C (chip), which is cut off into a U shape in the horizontal cross section through a shaving operation, toward the outside of the supporting portion 13a, so that the cut-off margin C can be moved out of the way in the subsequent shaving operation for another product (yoke 2).

The numeral 14 indicates a movable pedestal that constitutes the shaving apparatus 7 as a movable side member, the movable pedestal 14 being adapted to move vertically based on the driving of the drive means not shown in the figure. On the movable pedestal 14 is provided integrally a shaving die 15 for shaving the projections 2e in such a manner as to face the outer periphery of the cylindrical portion 2a of the yoke that has been incorporated into the fixed guide body 9. The shaving die 15 comprises a circular cylindrical hole 15a disposed concentrically with the supporting shaft member 10 on the fixed pedestal 8. Then, on the cylindrical hole 15a are formed circumferentially nine shaving teeth 15b for shaving the nine projections 2e formed circumferentially on the outer periphery of the cylindrical portion 2a of the yoke in such a manner as to face the respective projections 2e, the shaving teeth 15b being formed concentrically with the supporting shaft member 10. It is noted that the shaving teeth 15b are each formed in a vertically long shape and have a U shape in the horizontal cross section.

On the movable pedestal 14 is provided a disk-shaped holding guide body 16 which is disposed inside the cylindrical hole 15a of the shaving die 15 and is cocentrical with the shaving die 15. The holding guide body 16, which is supported on the movable pedestal 14 through a pair of coil springs 17 interposed against the movable pedestal 14, is adapted to be brought into contact with the opening end of the yoke 2 that has been incorporated into the fixed guide body 9, with the downward movement of the movable pedestal 14, before the shaving teeth 15b shave the projections 2e, and to receive the urging force of the coil springs 17 to press the yoke 2 toward the fixed guide body 9 when the shaving teeth 15b perform a shaving operation.

In the thus arranged shaving apparatus 7, fitting the boss cylindrical portion 5b of the yoke 2 with the boss plate 5 incorporated thereinto on the leading end portion 10a of the supporting shaft member that projects from the fixed guide body 9 and also fitting the positioning holes 2f, 5e over the positioning pin 12 allow the yoke 2 to be positioned circumferentially against the fixed guide body 9 and to be incorporated concentrically with the supporting shaft member 10. After being thus set, moving the movable pedestal 14 downward allows the holding guide body 16 to be brought into contact with the opening end of the yoke 2 to press the yoke 2 toward the fixed guide body 9, and also the projections 2e to be pressed against the abutting piece portions 13c of the shaving punch 13. Then in this state, the projections 2e are to be shaven by the shaving teeth 15b of the shaving die 15, where the load acting on the yoke 2 due to the shaving operation is adapted to be received by the urging force of the coil spring 11 provided between the supporting shaft member 10 and the fixed guide body 9 and the urging force of the coil springs 17 interposed between the holding guide body 16 and the movable pedestal 14.

In the thus arranged present embodiment, because the yoke 2 that constitutes the flywheel 1 is brought into an incorporated state close to the actual state of usage where the boss plate 5 is caulked and fixed to the yoke when shaving the projections 2e formed on the outer periphery of the cylindrical portion 2a of the yoke 2 using the shaving apparatus 7, the roundness can be ensured sufficiently even while formed on the flywheel 1, whereby it is possible to provide highly reliable products.

Also, in the case above, because the shaving apparatus 7 is arranged in such a manner that in the fixed guide body 9 on the fixed pedestal 8 is provided the supporting shaft member 10, and that the shaving die 15 is incorporated concentrically with the supporting shaft member 10, further the apparatus being adapted to perform a shaving operation in the axial direction of the supporting shaft member 10, the accuracy in the roundness of the projections 2e formed preliminarily on the yoke 2 in a projecting manner as well as the accuracy in forming the projections 2e circumferentially can be increased, even if reduced originally, through the shaving operation, whereby it is possible to achieve a further reliable flywheel 1. In addition, because the shaving operation is performed in the axial direction of the supporting shaft member, that is, in the longitudinal direction of the yoke 2, there will occur no trouble of allowing burrs on the end surface (corner angle) leading the rotation of the flywheel 1, whereby it is possible to perform highly accurate detection as a trigger. Then, in this case, even if burrs may be formed on a projection 2e, the burrs form on an end surface on the cylindrical bottom portion 2b of the projection 2e, making no impact on the sensing function provided by employing the projection 2e as a trigger.

Furthermore, with the arrangement above, because no burrs are to be formed on either the circumferential end surfaces of the projections 2e, and also the circumferential positioning is to be made accurately, it is advantageously possible to perform highly accurate detection in whichever direction the flywheel 1 rotates, resulting in an increase in versatility.

Also, with the arrangement above, although a plurality of projections 2e are provided circumferentially on the cylindrical portion 2a of the yoke, because the shaving operation for the projections 2e is to be performed in the longitudinal direction of the yoke, it is possible to shave all of the circumferentially arranged projections 2e in a single shaving operation, resulting in an increase in workability.

In addition, because the shaving apparatus 7 embodying the present invention provides positioning means, it is possible to make the circumferential positioning of the cylindrical portion 2a of the yoke with a simple operation of fitting the positioning pin 12 provided in the fixed guide body 9 into the positioning holes 2f, 5e. Therefore, even if the projections 2e may be formed on the outer periphery of the cylindrical portion 2a of the yoke not evenly but displaced in only a portion, the yoke 2 can be mounted on while positioned against the fixed pedestal 8 simply and easily, resulting in a further increase in workability.

Further, with the arrangement above, because the guide portion 13d is formed continuously from each abutting piece portion 13c of the shaving receiving member 13, cut-off margin C (chip) produced in a shaving operation can be discharged efficiently out of the shaving apparatus 7, so that the cut-off margin C can be moved out of the way in the subsequent shaving operation for another product (yoke 2), resulting in a still further increase in workability.

It will be appreciated here that the present invention is not restricted to the above-described embodiment, and the yoke may be formed separately from the boss portion. In this case, the boss portion is to be caulked and fixed to the yoke preliminarily, where even if the roundness of the yoke may be damaged through caulking and fixing, performing a shaving operation using the shaving apparatus after the boss portion is caulked and fixed allows the roundness of the projections to be ensured to achieve a highly reliable flywheel.

### [Industrial Applicability]

As described above, an apparatus for shaving projection formed on flywheel and a method for shaving triggering projections according to the present invention are useful for a triggering projection shaving apparatus and a method of shaving triggering projections on a flywheel which detects the rotational state, and especially useful because formations are realized without damaging to the complete roundness of the cylindrical portion of a yoke.

## Claims

1. An apparatus for shaving a projection formed on a flywheel adapted to shave a projection formed in a projecting manner outward from the outer periphery of a bottomed cylindrical yoke in a flywheel to be fitted and fixed on a rotation axis, the shaving apparatus comprising: a fixed pedestal provided with a supporting shaft member which penetratingly supports the boss portion of the yoke for fitting on the rotation axis; and a movable pedestal which is displaced cocentrically with the supporting shaft member and is provided with the shaving die for shaving the projection in the axial direction of the supporting shaft member.

2. The apparatus for shaving a projection formed on a flywheel according to claim 1, wherein the yoke has a plurality of projections formed circumferentially on the outer periphery thereof, and the shaving die has a plurality of shaving teeth formed circumferentially on the inner cylindrical surface thereof along the outer diameter of the cylindrical portion of the yoke in such a manner as to face the respective projections.

3. The apparatus for shaving a projection formed on a flywheel according to claim 2, wherein the shaving teeth are adapted to shave the outer peripheral surface and both the circumferential sides of the projections.

4. The apparatus for shaving a projection formed on a flywheel according to any of claims 1 to 3, wherein between the yoke and the fixed pedestal is provided positioning means for positioning the yoke circumferentially with respect to the fixed pedestal.

5. The apparatus for shaving a projection formed on a flywheel according to any of claims 1 to 4, wherein on the fixed pedestal is provided a shaving receiving member to be butted against the end surfaces of the projections which are on the leading side of the shaving direction, and in the shaving receiving member is formed a guide portion adapted to guide chips due to shaving out of the shaving apparatus.

6. A method of shaving a projection formed on a flywheel, wherein when shaving a projection formed in a projecting manner outward from the outer periphery of a bottomed cylindrical yoke in a flywheel to be fitted and fixed on a rotation axis, a shaving apparatus comprises: a fixed pedestal provided with a supporting shaft member which penetratingly supports the boss portion of the yoke for fitting on the rotation axis; and a movable pedestal which is displaced cocentrically with the supporting shaft member and is provided with the shaving die for shaving the projection in the axial direction of the supporting shaft member, said method comprising steps of; fitting the boss portion of the yoke over the supporting shaft member; and then shaving the projection on the yoke in the axial direction of the supporting shaft member.

7. The method of shaving a projection formed on a flywheel according to claim 6, wherein the boss portion is caulked and fixed to the yoke in advance.
